# EUROPEAN PATENT APPLICATION

(11) **EP 4 831 575 A1**
(43) Date of publication of application: **28.10.2026**
(21) Application number: 25172150.2
(22) Date of filing: 24.04.2025
(51) Int. Cl.: F28D 7/10, F02M 31/16, F17C 7/00, F17C 7/04

(54) **A HYDROGEN FUEL SUPPLY SYSTEM OF A VEHICLE**

(71) Applicant: Volvo Truck Corporation, 405 08 Göteborg (SE)
(72) Inventor: SONDEREGGER, Sigurd, 436 37 ASKIM (SE); HAGBY, Anton, 414 78 GÖTEBORG (SE); MALEK, Patrik, 421 55 VÄSTRA FRÖLUNDA (SE)
(74) Representative: Kransell & Wennborg KB

(57) **Abstract**

A hydrogen fuel supply system (100) for a hydrogen consumer (10, 10') of a vehicle (1). The fuel supply system (100) comprises: a plurality of hydrogen storage tanks (110a, 110b, 110c) storing pressurized hydrogen; a hydrogen supply line (120) in fluid communication with the plurality of hydrogen storage tanks (110a, 110b, 110c); a hydrogen heat exchanger (130) extending along heat exchanger longitudinal axis (A1), being arranged externally to the plurality of hydrogen storage tanks (110a, 110b, 110c) and fluidly connected downstream to the hydrogen supply line (120), the hydrogen heat exchanger (130) comprising: a heat exchanger body (132) having at least one elongated cavity (133a, 133b, 133c, 133d) extending along the heat exchanger longitudinal axis (A1); at least one straight hydrogen pipe (134a, 134b, 134c, 134d) arranged in the elongated cavity, the hydrogen pipe (134a, 134b, 134c, 134d) having a length-to-diameter ratio exceeding 15; and at least one coolant channel (136a, 136b, 136c, 136d) configured to receive a coolant fluid, the coolant channel extending inside the cavity, outside of the hydrogen pipe.

## Description

### TECHNICAL FIELD

The disclosure relates generally to fuel supply systems. In particular aspects, the disclosure relates to a hydrogen fuel supply system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle, unless explicitly stated so.

### BACKGROUND

Hydrogen stored in pressurized tanks often experiences a temperature drop below ambient conditions, particularly under cold operating environments. Such temperature reduction can impair the performance and efficiency of the hydrogen consumer, e.g. being an internal hydrogen combustion engine or fuel cell. In existing systems, the challenge of effectively preheating the hydrogen while simultaneously optimizing packaging within the vehicle remains inadequately addressed.

### SUMMARY

According to a first aspect of the disclosure, a hydrogen fuel supply system for a hydrogen consumer of a vehicle is provided. The fuel supply system comprises: a plurality of hydrogen storage tanks storing pressurized hydrogen; a hydrogen supply line in fluid communication with the plurality of hydrogen storage tanks; a hydrogen heat exchanger extending along heat exchanger longitudinal axis, being arranged externally to the plurality of hydrogen storage tanks and fluidly connected downstream to the hydrogen supply line, the hydrogen heat exchanger comprising: a heat exchanger body having at least one elongated cavity extending along the heat exchanger longitudinal axis; at least one straight hydrogen pipe arranged in the elongated cavity, the hydrogen pipe having a length-to-diameter ratio exceeding 15; and at least one coolant channel configured to receive a coolant fluid, the coolant channel extending inside the cavity, outside of the hydrogen pipe.

The first aspect of the disclosure may seek to solve problems related to inadequate and inefficient preheating of pressurized hydrogen, particularly in cold ambient conditions where the hydrogen temperature may drop significantly below operating thresholds. For example, providing an elongated, narrow hydrogen pipe (having a length-to-diameter ratio exceeding 15) together with an integrated coolant channel can rapidly transfer heat to the hydrogen while minimizing thermal mass. Thus, the coolant channel is integrated into the heat exchanger body. In other words, by arranging the hydrogen pipe and the coolant channel inside the same cavity, the cavity being dimensioned to house the elongated, narrow hydrogen pipe as well as the coolant channel, a particular suitable heat exchanger for the purpose of transfer heat to the hydrogen may be provided. The coolant channel is typically arranged radially outside of the hydrogen pipe within the cavity. A technical benefit of the first aspect may include a more compact yet highly efficient heat exchanger. The heat exchanger of the first aspect may thus improve operations in cold ambient conditions which typically reduces the risk of hydrogen consumer derating, and, owing to the specific features of the hydrogen heat exchanger may also facilitate a streamlined arrangement of the heat exchanger adjacent, or between the hydrogen storage tanks. It should be understood that the hydrogen supply line is configured to receive hydrogen from the plurality of hydrogen storage tanks. The hydrogen supply line is thus in fluid communication with the plurality of hydrogen storage tanks on one hand, and the hydrogen heat exchanger on the other hand. The hydrogen supply line is thus arranged downstream of the hydrogen storage tanks and upstream of the hydrogen heat exchanger. The hydrogen supply line may comprise, or be composed of, a manifold or a T-connection.

Optionally in some examples, including in at least one preferred example, the hydrogen heat exchanger has a main extension along the heat exchanger longitudinal axis, wherein each hydrogen tank has a main extension along a respective tank longitudinal axis, and wherein the hydrogen heat exchanger is arranged such that its heat exchanger longitudinal axis is substantially parallel to the tank longitudinal axis of the hydrogen storage tanks and/or wherein the main extension of the hydrogen heat exchanger substantially corresponds to the main extension of the hydrogen storage tanks. A technical benefit may include efficient and compact packaging of the hydrogen heat exchanger in relation to the hydrogen storage tanks, as the heat exchanger longitudinal axis is substantially parallel to the tank longitudinal axis and/or its main extension substantially corresponds to that of the hydrogen storage tanks. This arrangement may improve spatial integration in the vehicle, simplify routing of hydrogen supply lines, and minimize unused space. Consequently, it can lead to a more streamlined vehicle layout. In other words, packaging of the hydrogen heat exchanger between the hydrogen storage tanks may be optimized. It should be noted that substantially parallel may refer to as parallel, or at least not deviating by more than 10 °. Correspondingly, that the main extension of the hydrogen heat exchanger substantially corresponds to the main extension of the hydrogen storage tanks may refer to that the main extension of the hydrogen heat exchanger corresponds to the main extension of the hydrogen storage tanks, or at least that the two main extensions are not deviating from each other by more than 10 °. The main extension of the hydrogen heat exchanger may be referred to as the length of the hydrogen heat exchanger. The main extension of a hydrogen storage tank may be referred to as the length of the hydrogen storage tank. Thus, the hydrogen heat exchanger may have a length corresponding, or substantially corresponding, to the length of the hydrogen storage tanks. Typically, the hydrogen storage tanks, or at least two of the hydrogen storage tanks, have the same length.

Optionally in some examples, including in at least one preferred example, the hydrogen pipe has a length-to-diameter ratio exceeding 25, exceeding 40, or exceeding 50. A technical benefit may include improved heat exchanger performance and reduced thermal mass of the hydrogen pipe. In one preferred example, wherein the hydrogen pipe has a length-to-diameter ratio exceeding 25, the elongated and narrow configuration increases the effective heat transfer surface area relative to its volume, thereby facilitating more rapid and uniform heating of the hydrogen by the surrounding coolant channel. In another preferred example, wherein the hydrogen pipe has a length-to-diameter ratio exceeding 40 or even exceeding 50, the further elevated aspect ratio enhances the conductive interface between the hydrogen and the coolant channel. This additive effect may improve thermal transfer efficiency, and also support a compact, optimized packaging of the hydrogen heat exchanger when arranged externally to the hydrogen storage tanks.

Optionally in some examples, including in at least one preferred example, the elongated cavity is a first elongated cavity and the heat exchanger body further comprises at least a second elongated cavity; wherein the straight hydrogen pipe is a first straight hydrogen pipe and the heat exchanger further comprises at least a second straight hydrogen pipe arranged in the second elongated cavity, the second straight hydrogen pipe having a length-to-diameter ratio exceeding 15. A technical benefit may include enhanced thermal efficiency and improved system flexibility through the use of multiple elongated cavities in the heat exchanger body. The configuration with the second elongated cavity increases the effective heat transfer surface area and may facilitate more uniform preheating of the hydrogen. Additionally or alternatively, the provision of a second elongated cavity may allow separate control of hydrogen flow paths (via the first and second straight hydrogen pipes) if required. Such a modular arrangement of the heat exchanger may contribute to optimized packaging and integration of the hydrogen fuel supply system within the vehicle. For example, also the heat exchanger body may have a modular design in which cavities may be added or removed as required.

Optionally in some examples, including in at least one preferred example, the first and second straight hydrogen pipes are arranged in series to define a continuous hydrogen flow path through the hydrogen heat exchanger, wherein the first and second straight hydrogen pipes are interconnected by at least one interconnecting channel. A technical benefit may include improved thermal transfer continuity and/or reduced flow disruptions, as the first and second straight hydrogen pipes arranged in series, interconnected by at least one interconnecting channel, define a continuous hydrogen flow path through the hydrogen heat exchanger. The interconnecting channel may e.g. be a pipe bend, or it may be comprised in a block simply providing a space interconnecting the first and second straight hydrogen pipes. The interconnecting channel may e.g. provide a hydrogen flow path bending over 90 degrees and more preferably about 180 degrees.

Optionally in some examples, including in at least one preferred example, the first and second straight hydrogen pipes are arranged in parallel. A technical benefit may include enhanced flow distribution and/or improved thermal transfer, as the first and second straight hydrogen pipes arranged in parallel may provide simultaneous hydrogen flow paths through the hydrogen heat exchanger. Hereby, the pressure drop of the hydrogen flowing through the hydrogen heat exchanger may be reduced.

Optionally in some examples, including in at least one preferred example, the first straight hydrogen pipe comprises a heat exchanger hydrogen inlet configured to receive hydrogen from the hydrogen supply line, and the second straight hydrogen pipe comprises a heat exchanger hydrogen outlet configured to discharge hydrogen from the hydrogen heat exchanger. A technical benefit may include improved hydrogen flow management, as the first straight hydrogen pipe comprises a heat exchanger hydrogen inlet configured to receive hydrogen from the hydrogen supply line, and the second straight hydrogen pipe comprises a heat exchanger hydrogen outlet configured to discharge hydrogen from the hydrogen heat exchanger. Thus, hydrogen is able to flow from the heat exchanger hydrogen inlet via the first straight hydrogen pipe and subsequently into the second straight hydrogen pipe (typically via at least one interconnecting channel, e.g. a pipe bend) and out of the hydrogen heat exchanger via the heat exchanger hydrogen outlet. Thus, the heat exchanger hydrogen inlet is arranged upstream of the heat exchanger hydrogen outlet. Moreover, in such example, the second straight hydrogen pipe is arranged downstream of the first straight hydrogen pipe. Alternatively, in case the first and second straight hydrogen pipes are parallel, each one of the first and second straight hydrogen pipes comprises a corresponding heat exchanger hydrogen inlet and heat exchanger hydrogen outlet.

Optionally in some examples, including in at least one preferred example, the heat exchanger hydrogen inlet and the heat exchanger hydrogen outlet are arranged in a common end portion of the hydrogen heat exchanger, or are arranged in opposite end portions of the hydrogen heat exchanger. A technical benefit may include at least one of enhanced system integration and design versatility. For example, by arranging the heat exchanger hydrogen inlet and the heat exchanger hydrogen outlet in a common end portion of the hydrogen heat exchanger, the routing of the hydrogen may be facilitated. This configuration may facilitate optimized hydrogen flow management and/or flexible packaging within the vehicle.

Optionally in some examples, including in at least one preferred example, the hydrogen heat exchanger comprises a first end portion in one end of the main extension of the heat exchanger, and a second end portion in an opposite end of the main extension, and wherein both the heat exchanger hydrogen inlet and the heat exchanger hydrogen outlet are arranged in the first end portion or the second end portion of the hydrogen heat exchanger.

Optionally in some examples, including in at least one preferred example, the hydrogen fuel supply system further comprising a pressure regulator fluidly connected downstream of the hydrogen heat exchanger for regulating the hydrogen pressure prior delivery to the hydrogen consumer. A technical benefit may include enhanced hydrogen pressure regulation to the hydrogen consumer. Thus, the pressure regulator fluidly connected downstream of the hydrogen heat exchanger may ensure that hydrogen pressure is regulated prior to its delivery to the hydrogen consumer.

Optionally in some examples, including in at least one preferred example, the hydrogen heat exchanger further comprises a coolant inlet port and a coolant outlet port for receiving and discharging the coolant fluid, respectively. A technical benefit may include at least one of enhanced control of the coolant fluid and streamlined system integration. Hereby, and effective coolant flow management may be achieved. The coolant channel may for example be fluidly connected to a vehicle cooling system.

Optionally in some examples, including in at least one preferred example, wherein the coolant inlet port and the coolant outlet port are arranged in a common end portion of the hydrogen heat exchanger, or are arranged in opposite end portions of the hydrogen heat exchanger. A technical benefit may include at least one of improved coolant fluid flow distribution and increased design flexibility. In case the coolant inlet port and coolant outlet port are arranged in a common end portion of the hydrogen heat exchanger, they are preferably arranged in an opposite end portion as the heat exchanger hydrogen inlet and/or the heat exchanger hydrogen outlet.

Optionally in some examples, including in at least one preferred example, the coolant channel is configured to transfer heat from the coolant fluid to hydrogen flowing through the hydrogen pipe to preheat the hydrogen prior to its use in the hydrogen consumer. A technical benefit may include improved hydrogen preheating, as the coolant channel is configured to transfer heat from the coolant fluid to hydrogen flowing through the hydrogen pipe, thereby preheating the hydrogen prior to its use in the hydrogen consumer.

Optionally in some examples, including in at least one preferred example, further comprising a control unit configured to regulate the flow of coolant fluid to the hydrogen heat exchanger in response to at least one of: the temperature of the coolant fluid; the temperature of the hydrogen within the hydrogen pipe. A technical benefit may include at least one of improved thermal management and optimized control of hydrogen preheating.

Optionally in some examples, including in at least one preferred example, the control unit is configured to receive a signal from at least one sensor, the sensor being configured to measure at least one of: the temperature of the coolant fluid; the temperature of the hydrogen within the hydrogen pipe. Thus, the control unit may be configured to regulate the flow of coolant fluid to the hydrogen heat exchanger in response to the signal from the at least one sensor. According to some examples, the at least one sensor is comprised in the fuel supply system.

Optionally in some examples, including in at least one preferred example, the cavity of the heat exchanger body is dimensioned to accommodate the cylindrical geometry of the hydrogen pipe and the coolant channel. A technical benefit may include improved structural compatibility of the cavity with regards to the hydrogen pipe and the coolant channel. For example, the dimension of the cavity is adapted to accommodate the hydrogen pipe and the coolant channel.

Optionally in some examples, including in at least one preferred example, a radius of the cavity is equal to the sum of the radial extension of the hydrogen pipe and the coolant channel. A technical benefit may include improved structural compatibility of the cavity with regards to the hydrogen pipe and the coolant channel. Thus, a compact and precise component alignment of the hydrogen pipe and the coolant channel in the cavity with minimal spacing may be achieved. This may further improve efficient heat transfer.

Optionally in some examples, including in at least one preferred example, the hydrogen pipe and the coolant channel are concentric. For example, the hydrogen pipe and the coolant channel has a round diameter (i.e. in a plane perpendicular to the respective longitudinal axis) with a common centre axis. However, according to some examples, the hydrogen pipe and the coolant channel are non-concentric. Regardless of whether the hydrogen pipe and the coolant channel are concentric or non-concentric, the coolant channel is typically arranged radially outside the of the hydrogen pipe.

Optionally in some examples, including in at least one preferred example, the radial cross section of the coolant channel is annular. A technical benefit may include enhanced uniformity of the coolant channel with regards to the hydrogen pipe. Thus, the coolant fluid flow distribution over the hydrogen pipe may be optimized for improved heat transfer. Alternatively, the coolant channel may comprise a plurality of parallel coolant passages to distribute the coolant fluid evenly across the hydrogen pipe. Such cooling passages would thus be arranged around the periphery of the hydrogen pipe.

Optionally in some examples, including in at least one preferred example, at least two adjacent hydrogen storage tanks are arranged in a parallel configuration and the hydrogen heat exchanger is disposed between the two adjacent tanks. A technical benefit may include at least one of improved packaging and optimized system integration. Thus, by the parallel configuration, a compact and efficient utilization of the available space within the vehicle may be provided.

Optionally in some examples, including in at least one preferred example, the heat exchanger body comprises an elongated through-hole extending along the heat exchanger longitudinal axis, and wherein the hydrogen heat exchanger further comprises an electrical heating element arranged inside the elongated through-hole. A technical benefit may include at least one of enhanced thermal control and augmented heating performance. The electrical heating element may thus provide for supplemental heat to ensure effective hydrogen preheating, e.g. under low temperature conditions. The elongated through-hole may e.g. be arranged between two elongated cavities. It should thus be understood that the elongated through-hole is separate from the one or more elongated cavities.

The hydrogen pipe may be certified for high-pressure hydrogen operation, such as certification for H35 or H70 service. Additionally or alternatively, the hydrogen storage tanks is configured for storing pressurized hydrogen at a maximum pressure of above 500 bar, e.g. approximately 875 bar. Thus, the hydrogen storage tanks may at least temporarily, store the pressurized hydrogen at a maximum pressure of above 500 bar, e.g. approximately 875 bar. Additionally or alternatively, the at least one hydrogen pipe is configured for high-pressure hydrogen operation, e.g. for delivering hydrogen from the hydrogen storage tanks storing pressurized hydrogen at a maximum pressure of above 500 bar, e.g. approximately 875 bar.

In use, the process may carried out as described in the following. The plurality of hydrogen storage tanks store pressurized hydrogen. The hydrogen supply line is in fluid communication with the plurality of hydrogen storage tanks to convey pressurized hydrogen from the hydrogen storage tanks. The hydrogen supply line then feeds hydrogen to the hydrogen heat exchanger, which is arranged externally to the plurality of hydrogen storage tanks and extends along the heat exchanger longitudinal axis. Within the elongated cavity, the at least one straight hydrogen pipe receives the hydrogen from the hydrogen supply line. Also within the same elongated cavity, the least one coolant channel provides a coolant fluid flow. As the pressurized hydrogen is conveyed through the at least one straight hydrogen pipe, the coolant fluid flows through the at least one coolant channel. The proximity of the coolant channel to the hydrogen pipe ensures that heat is transferred effectively from the coolant fluid to the hydrogen.

According to second aspect of the disclosure, a hydrogen-powered vehicle comprising the hydrogen fuel supply system according to the first aspect is provided. The second aspect of the disclosure may seek to solve the same problem as described for the first aspect of the disclosure. Thus, effects and features of the second aspect of the disclosure are largely analogous to those described above in connection with the first aspect of the disclosure, of which some are explicitly mentioned below typically without repeating the technical effect thereof.

Optionally in some examples, including in at least one preferred example, the vehicle further comprises a hydrogen consumer, wherein the hydrogen fuel supply system is configured to deliver preheated hydrogen to the hydrogen consumer. The hydrogen consumer may be a hydrogen internal combustion engine or a fuel cell.

According to third aspect of the disclosure, a method for transferring heat to increase the temperature of pressurized hydrogen in a hydrogen fuel supply system for a hydrogen-powered vehicle is provided. The method comprises: providing a hydrogen heat exchanger arranged externally to a plurality of hydrogen storage tanks, the hydrogen heat exchanger comprising at least one straight hydrogen pipe having a length-to-diameter ratio exceeding 15; delivering a coolant fluid through a coolant channel integrated into the hydrogen heat exchanger for transferring heat from the coolant fluid to hydrogen flowing through the hydrogen pipe; and supplying the heated hydrogen to a hydrogen consumer. The third aspect of the disclosure may seek to solve the same problem as described for the first aspect of the disclosure. Thus, effects and features of the third aspect of the disclosure are largely analogous to those described above in connection with the first aspect of the disclosure, of which some are explicitly mentioned below typically without repeating the technical effect thereof. In the process of heating the hydrogen in the hydrogen pipe, the coolant fluid will be cooled. The method may thus include cooling of the coolant fluid in the coolant channel. The method may further comprises providing the hydrogen heat exchanger aligned such that its centerline is parallel, or substantially parallel to the centerlines of the plurality of hydrogen storage tanks, and/or providing the hydrogen heat exchanger arranged such that its length corresponds, or substantially corresponds to the length of the hydrogen storage tanks.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of a vehicle having a hydrogen fuel supply system according to one example.
**FIG. 2** is an exemplary, partly schematic, view of the hydrogen fuel supply system configured to supply pressurized hydrogen to a hydrogen consumer according to one example.
**FIG. 3a** is a perspective view of the hydrogen heat exchanger as a whole, illustrating the heat exchanger body and the arrangement of hydrogen pipes according to one example.
**FIG. 3b** is a perspective view of an end portion of the hydrogen heat exchanger, showing interconnecting channels of the hydrogen pipes according to one example.
**FIG. 3c** is a perspective view of the opposite end portion of the hydrogen heat exchanger as shown in Fig. 3b according to one example.
**FIG. 3d** is a perspective view of a part of the heat exchanger illustrating the four elongated cavities extending along the heat exchanger body according to one example.
**FIG. 5a** is an exemplary, partly schematic, perspective view of the heat exchanger showing a partly transparent heat exchanger body through which the hydrogen pipes extend, according to one example.
**FIG. 5b** is a radial cross-sectional view of the heat exchanger, illustrating the annular coolant channels in the corresponding elongated cavities and the radial placement of the hydrogen pipes within the coolant channels according to one example.
**FIG. 6** is a radial cross-sectional view of the first elongated cavity, showing the first straight hydrogen pipe and the first coolant channel, according to one example.
**FIG. 7** is an exemplary, partly schematic, perspective view of two adjacent hydrogen storage tanks arranged in parallel, with the hydrogen heat exchanger disposed between the tank according to one example.
**FIG. 8** is an exemplary flow-chart illustrating a method for transferring heat to increase the temperature of pressurized hydrogen in the hydrogen fuel supply system according to one example.

### DETAILED DESCRIPTION

The detailed description set forth below provides information and examples of the disclosed technology with sufficient detail to enable those skilled in the art to practice the disclosure.

The disclosed technology may solve at least one of the problems related to inefficient preheating of pressurized hydrogen, and suboptimal packaging of hydrogen fuel supply systems in vehicles, particularly under low ambient temperature conditions. The disclosed hydrogen fuel supply system comprises a plurality of hydrogen storage tanks storing pressurized hydrogen, a hydrogen supply line in fluid communication with the plurality of hydrogen storage tanks, and a hydrogen heat exchanger extending along a heat exchanger longitudinal axis, arranged externally to the hydrogen storage tanks and fluidly connected downstream to the hydrogen supply line. The hydrogen heat exchanger comprises a heat exchanger body having at least one elongated cavity extending along the heat exchanger longitudinal axis, at least one straight hydrogen pipe arranged in the elongated cavity and having a length-to-diameter ratio exceeding 15, and at least one coolant channel configured to receive a coolant fluid, the coolant channel extending inside the cavity and outside of the hydrogen pipe. A technical benefit may include improved hydrogen preheating performance, as the efficient heat transfer from the coolant fluid in the coolant channel to the hydrogen flowing through the lengthy, narrow hydrogen pipe facilitates optimal thermal conditioning prior to its use in the hydrogen consumer, while the external arrangement of the hydrogen heat exchanger provides enhanced packaging and integration within the vehicle. The hydrogen pipe having the defined length-to-diameter ratio and the strategically arranged coolant channel provides an additive technical effect of improved heat transfer efficiency that enables improved hydrogen preheating of the hydrogen prior to its delivery to the hydrogen consumer. The length-to-diameter ratio may be expressed in terms of aspect ratio, i.e. width to length, which for a pipe may be expressed as diameter (d) to length (L) as d:L. Thus, the aspect ratio may here be 1:15, or 1:25, or 1:40 or even 1:50 as exemplified herein.

The heat exchanger body may comprise, or be manufactured of, an extruded aluminum body with pressure-rated end caps attached to opposite ends thereof. This choice of material and design is particularly advantageous for a modular design of the heat exchanger. It should be noted that the coolant channel is configured to, in use, provide the coolant fluid to heat the hydrogen flowing through the hydrogen pipe. For example, the hydrogen heat exchanger may be designed to operate under ambient conditions down to -40 °C. Typically, the coolant channel and the hydrogen pipe are conductively connected via a heat exchange interface, which e.g. may be the outer surface of the hydrogen pipe. The heat exchanger interface may thus be a heat transfer surface integrated into the heat exchanger.

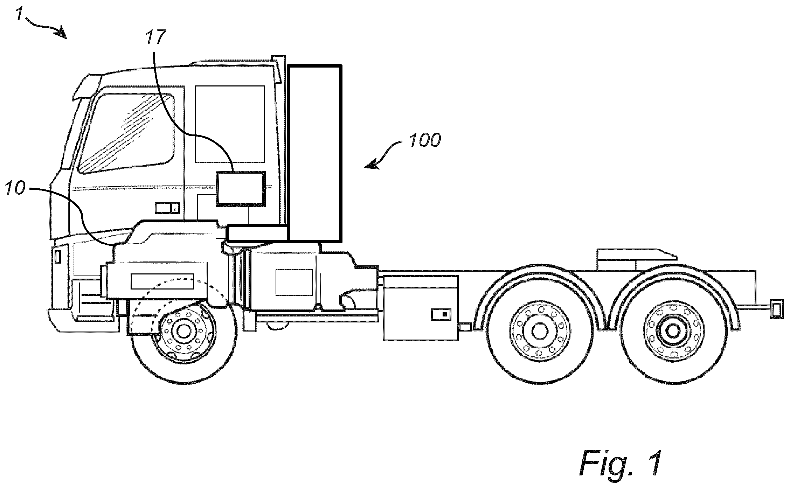

**FIG. 1** shows an exemplary vehicle 1 in the form of a heavy-duty truck. The vehicle 1 is a hydrogen-powered vehicle including a hydrogen consumer 10. In the example of Fig. 1, the hydrogen consumer 10 is an internal hydrogen combustion engine 10 configured to propel the vehicle 1 and drive wheels. As also shown in Fig. 1, the vehicle 1 comprises a control unit 17 and a hydrogen fuel supply system 100 configured to provide hydrogen to the hydrogen consumer 10.

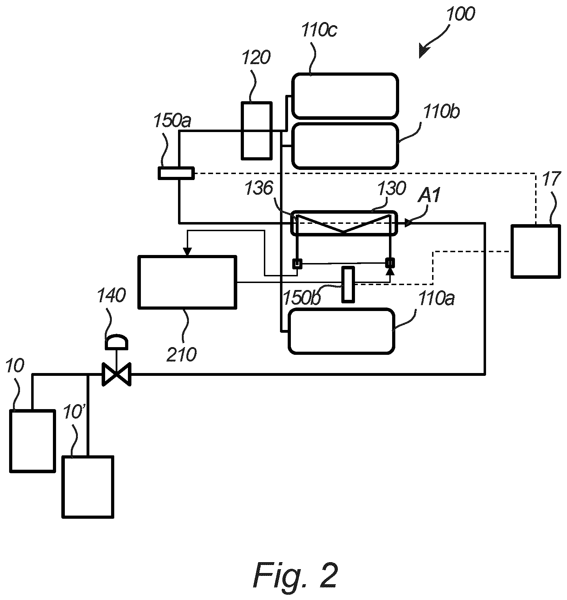

**FIG. 2** shows an exemplary, partly schematic illustration of a hydrogen fuel supply system 100, e.g. that of Fig. 1. In Fig. 2, the hydrogen fuel supply system 100 is configured to supply pressurized hydrogen to a hydrogen consumer 10, 10' being a hydrogen internal combustion engine 10 or a fuel cell 10'. The hydrogen fuel supply system 100 comprises a plurality of hydrogen storage tanks 110a, 110b, 110c storing pressurized hydrogen, a hydrogen supply line 120 in fluid communication with the plurality of hydrogen storage tanks 110a, 110b, 110c, and a hydrogen heat exchanger 130 extending along heat exchanger longitudinal axis A1, being arranged externally to the plurality of hydrogen storage tanks 110a, 110b, 110c and fluidly connected downstream to the hydrogen supply line 120.

In the example of Fig. 2, the number of hydrogen storage tanks is three, a first hydrogen storage tank 110a, a second hydrogen storage tank 110b and a third hydrogen storage tank 110c, but it should be mentioned that fewer or more hydrogen storage tanks may be included in the hydrogen fuel supply system. Each one of the first, second and third hydrogen storage tanks 110a, 110b, 110c in the example of Fig. 2 is configured to store pressurized hydrogen at a maximum pressure of above 500 bar, e.g. approximately 875 bar.

The hydrogen supply line 120 may comprise a manifold or a T-connection, to which at least two of the hydrogen storage tanks 110a, 110b, 110c are fluidly connected. In the example of Fig. 2, all of the first, second and third hydrogen storage tanks 110a, 110b, 110c are fluidly connected to the hydrogen supply line 120. The hydrogen from the hydrogen storage tanks 110a, 110b, 110c may thus converge in the hydrogen supply line 120 (or manifold or T-connection). The hydrogen supply line 120 is configured to supply the hydrogen to the heat exchanger130 in order to preheat the hydrogen prior to supplying it to the hydrogen consumer 10, 10'. The hydrogen is preheated by providing a coolant fluid in a coolant channel 136 of the heat exchanger 130. Thus, the hydrogen fuel supply system 100 is configured such that the coolant channel 136 transfers heat from the coolant fluid to the hydrogen flowing through the hydrogen heat exchanger 130 to preheat the hydrogen prior to its use in the hydrogen consumer 10, 10'. The coolant fluid may e.g. be that of a vehicle coolant system 210. The hydrogen fuel supply system 100 further comprising a pressure regulator 140 fluidly connected downstream of the hydrogen heat exchanger 130 for regulating the hydrogen pressure prior delivery to the hydrogen consumer 10.

The hydrogen fuel supply system 100 may further comprise a control unit 17, e.g. that of Fig. 1, configured to regulate the flow of coolant fluid to the hydrogen heat exchanger 130 in response to at least one of: the temperature of the coolant fluid; the temperature of the hydrogen within the hydrogen exchanger 130. In this example, the hydrogen fuel supply system 100 comprises first and second temperature sensors 150a, 150b configured to monitor the coolant fluid and the hydrogen in, or to, the heat exchanger 130. The control unit 17 may be configured to regulate the flow of coolant fluid to the hydrogen heat exchanger 130 in response to at least one of the temperature monitoring of the coolant fluid and the temperature monitoring of the hydrogen to, or within the heat exchanger 130. In other words, the control unit 17 may be configured to dynamically adjust the coolant fluid flow (e.g. by controlling an associated regulating valve) based on these temperature readings. This regulation may facilitate the hydrogen to be consistently preheated to the desired temperature.

It should be noted that, in case the hydrogen consumer is a fuel cell 10', the associated electric drive line typically comprises an electric traction machine powered by the fuel cell 10'. The electric traction machine is configured to propel the vehicle and the drive wheels. However, both a centrally arranged electric drive system with one electric traction machine as well as a de-centralized arranged electric drive system with one electric traction machine for each drive shaft associated with a pair of drive wheels, are possible.

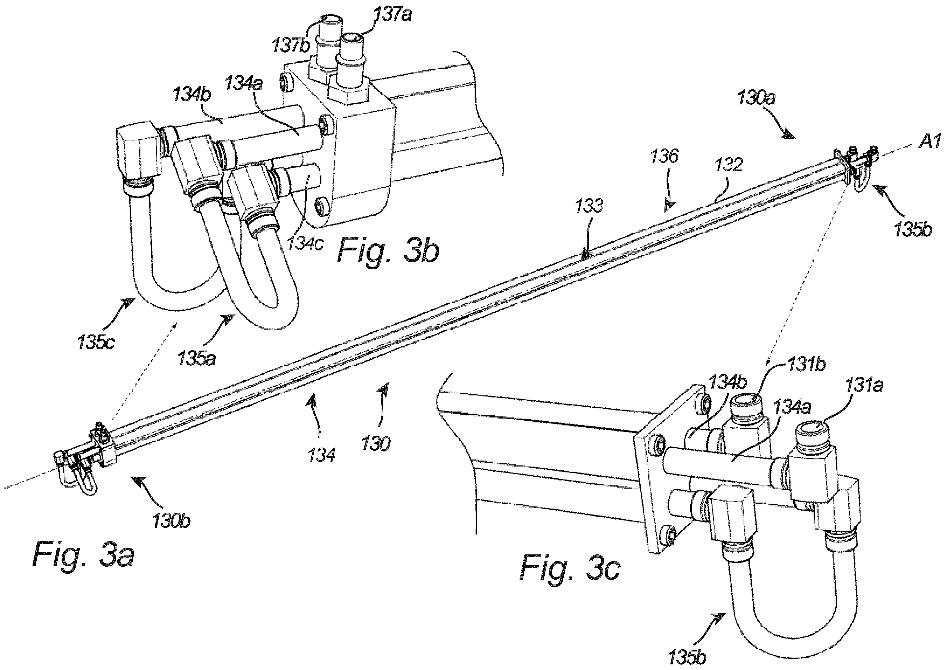

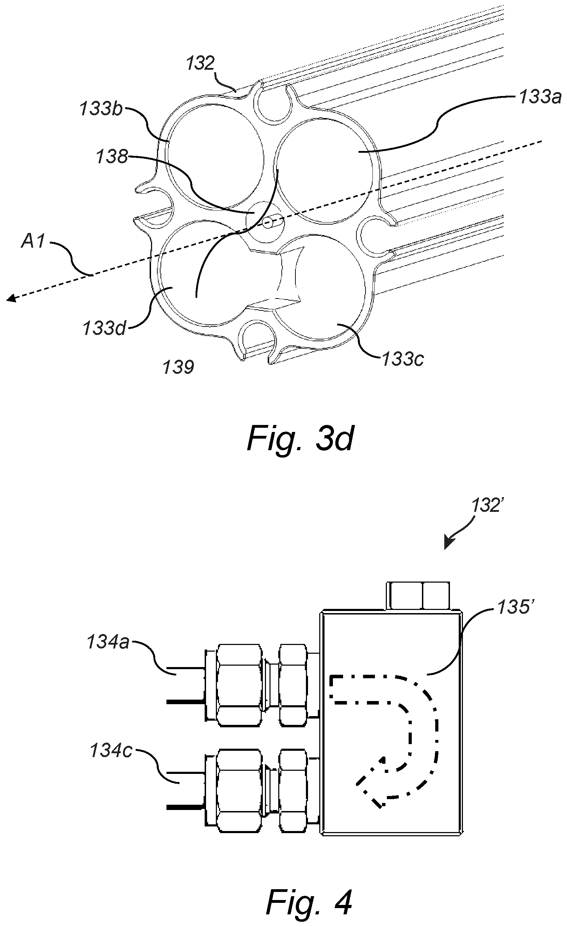

Turning to **FIGs. 3a, 3b, 3c** **and** **3d****,** showing the hydrogen heat exchanger 130 in more detail. The hydrogen heat exchanger 130 comprises a heat exchanger body 132 having at least one elongated cavity 133 extending along the heat exchanger longitudinal axis A1. In the current example, the number of elongated cavities is four, i.e. a first elongated cavity 133a, a second elongated cavity 133b, a third elongated cavity 133c and a fourth elongated cavity 133d, best shown in Fig. 3d. The heat exchanger 130 further comprises at least one straight hydrogen pipe 134. As for the number of elongated cavities 133, the number of straight hydrogen pipes 134 in the example are four, i.e. a first straight hydrogen pipe 134a, a second straight hydrogen pipe 134b, a third straight hydrogen pipe 134c and a fourth straight hydrogen pipe 134d. Each one of the straight hydrogen pipes 134a, 134b, 134c, 134d is arranged in a corresponding one of the elongated cavities 133a, 133b, 133c, 133d such that the first straight hydrogen pipe 134a is arranged in the first elongated cavity 133a, the second straight hydrogen pipe 134b is arranged in the second elongated cavity 133b, the third straight hydrogen pipe 134c is arranged in the third elongated cavity 133c and the fourth straight hydrogen pipe 134d is arranged in the fourth elongated cavity 133d.

Each one of the straight hydrogen pipes 134a, 134b, 134c, 134d has a length-to-diameter ratio exceeding 15, and in alternative examples, the length-to-diameter ratio may exceed 25, 40 or even 50. This elongated and narrow configuration ensures an increased heat transfer surface area relative to its cross-sectional area, thereby enhancing the thermal efficiency of heat exchange between the coolant fluid in the coolant channels and the hydrogen flowing within the hydrogen pipes 134.

In Figs. 3b-3c, the first straight hydrogen pipe 134a and the second straight hydrogen pipe 134b are shown as arranged in series to define a continuous hydrogen flow path through the hydrogen heat exchanger 130, wherein the first and second straight hydrogen pipes 134a, 134b are interconnected by at least one interconnecting channel (here being a pipe bend) 135a, 135b, 135c. In this configuration, the first straight hydrogen pipe 134a constitutes the initial portion of the hydrogen flow path in the heat exchanger 130, followed by the interposed third and fourth straight hydrogen pipes 134c, 134d, which are interposed between the first and second straight hydrogen pipes 134a, 134b, with the second straight hydrogen pipe 134b serving as the terminal portion of the hydrogen flow path within the heat exchanger 130. Thus, the first and second straight hydrogen pipes 134a, 134c are interconnected by a first interconnecting channel 135a, the second and third straight hydrogen pipes 134c, 134d are interconnected by a second interconnecting channel 135b, and the third and second straight hydrogen pipes 134d, 134b are interconnected by a third interconnecting channel 135c. The interconnecting channels 135a, 135b, 135c ensure smooth and continuous hydrogen flow through the sequentially connected hydrogen pipes 134a, 134b, 134c, 134d. Turning briefly to **FIG. 4** showing a side view of an alternative interconnecting channel 135' formed by a block 132'. The interconnecting channel 135' is here a space within the block 132' interconnecting the first and third straight hydrogen pipes 134a, 134c. The interconnecting channel (being a pipe bend as interconnecting channels 135a, 135b, 135c, or space within a block as interconnecting channel 135') may e.g. provide a hydrogen flow path bending over 90 degrees and more preferably about 180 degrees.

The first straight hydrogen pipe 134a comprises a heat exchanger hydrogen inlet 131a configured to receive hydrogen from the hydrogen supply line 120, while the second straight hydrogen pipe 134b comprises a heat exchanger hydrogen outlet 131b configured to discharge hydrogen from the hydrogen heat exchanger 130, as shown in Fig. 3c. This arrangement facilitates a defined and continuous flow of hydrogen through the heat exchanger 130.

In the present example, the heat exchanger hydrogen inlet 131a and the heat exchanger hydrogen outlet 131b are arranged in a common end portion 130a of the hydrogen heat exchanger 130, here being a first end portion 130a. However, alternatively, the heat exchanger hydrogen inlet 131a and the heat exchanger hydrogen outlet 131b may be arranged in opposite end portions 130a and 130b.

The hydrogen heat exchanger 130 further comprises a coolant inlet port 137a and a coolant outlet port 137b for receiving and discharging the coolant fluid, respectively. As best shown in Fig. 3b, these inlet and outlet ports 137a, 137b are shown to be arranged in the same end portion 130b, here being the second end portion 130b of the heat exchanger 130. Thus, in the shown example, the coolant inlet port 137a and coolant outlet port 137b are arranged in a common end portion 130b of the heat exchanger 130 which is opposite to the end portion 130a in which the heat exchanger hydrogen inlet 131a and the heat exchanger hydrogen outlet 131b are arranged.

Fig. 3d presents a perspective view of the elongated cavities 133a, 133b, 133c, 133d without the associated hydrogen pipes 134a, 134b, 134c, 134d shown. In Fig. 3d, an elongated through-hole 138 in the heat exchanger body 132 extending along the heat exchanger longitudinal axis A1 is shown. The through-hole 138 is separated from each one of the first to fourth elongated cavities 133a, 133b, 133c, 133d. Moreover, an electrical heating element 139 is arranged inside the elongated through-hole 138, thereby providing supplemental heat to further preheat the hydrogen in scenarios where the coolant fluid alone may be insufficient to raise the hydrogen temperature to the desired level.

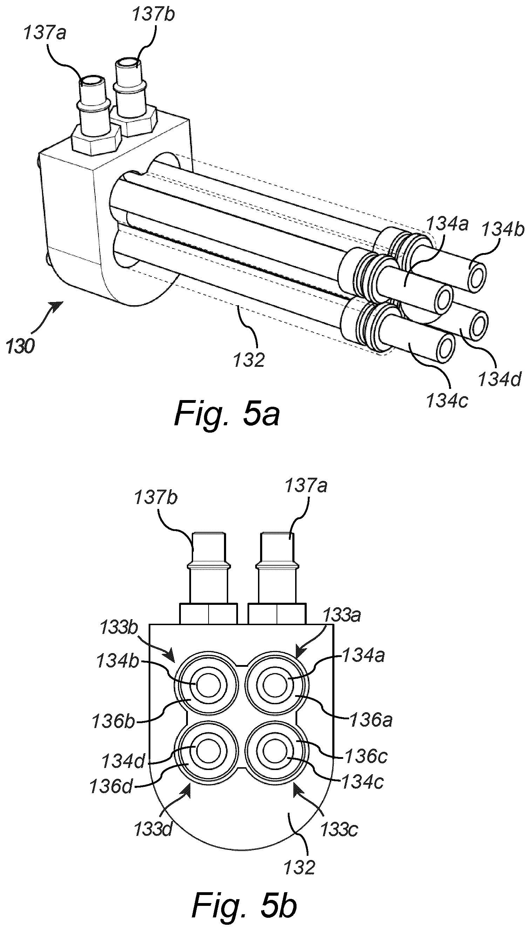

Turning to **FIGs. 5a and 5b****,** a detailed view of the hydrogen heat exchanger 130 is provided. In Fig. 5a, a perspective view shows a partly transparent heat exchanger body 132 through which four hydrogen pipes 134a, 134b, 134c, 134d extend, and the end portion of the heat exchanger 130 including the coolant inlet port 137a and the coolant outlet port 137b for receiving and discharging the coolant fluid. In an alternative example, the four hydrogen pipes 134a, 134b, 134c, 134d may be arranged in parallel within the heat exchanger body 132, wherein each hydrogen pipe is provided with a corresponding hydrogen inlet and hydrogen outlet.

Fig. 5b is a radial cross-sectional view of the hydrogen heat exchanger 130, wherein each of the four elongated cavities 133a, 133b, 133c, 133d is shown to contain the corresponding coolant channel 136a, 136b, 136c, 136d shaped with an annular radial cross section. The corresponding hydrogen pipes 134a, 134b, 134c, 134d are arranged radially within the annular coolant channels 136a, 136b, 136c, 136d.

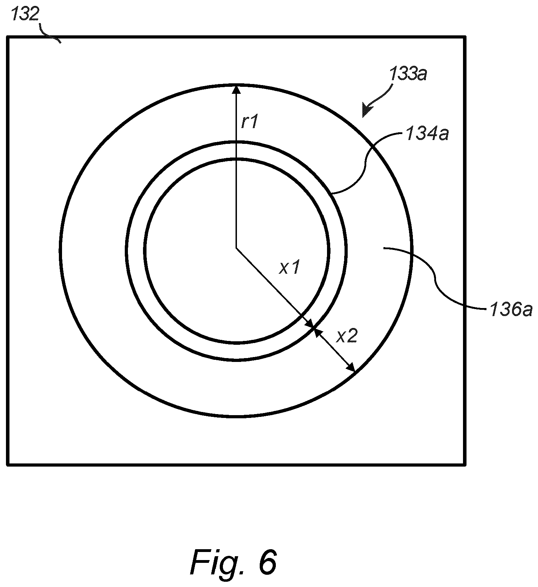

Turning to **FIG. 6****,** a radial cross-sectional view of the first elongated cavity 133a of the heat exchanger body 132 is provided. In this view, the first straight hydrogen pipe 134a and the first coolant channel 136a are clearly depicted. Here, the radius r1 of the cavity 133a, the radial extension x1 of the hydrogen pipe 134a (representing the radius of the hydrogen pipe 134a), and the radial extension x2 of the coolant channel 136a (representing the radial thickness of the coolant channel 136a) are envisaged. As shown in this example, the first cavity 133a is dimensioned to accommodate the cylindrical geometry of the first straight hydrogen pipe 134a and the first coolant channel 136a. Thus, the radial cross section of the first coolant channel 136a is annular or shaped as an annulus. Even though only show for the first cavity 133a here, the same is typically true for the second to fourth cavities 133b, 133c, 133d and corresponding hydrogen pipes 134b, 134c, 134d and coolant channels 136b, 136c, 136d. The coolant fluid, supplied for example by the vehicle coolant system 210, enters the coolant channel 136a and flows adjacent to the elongated, narrow hydrogen pipe 134a, thereby facilitating efficient heat transfer from the coolant fluid to the hydrogen. Thus, the annular configuration of the coolant channel 136a ensures uniform distribution of the coolant fluid around the hydrogen pipe 134a.

In one embodiment, a radius r1 of the cavity 133a is equal to the sum of the radial extension x1 of the hydrogen pipe 134a and the radial extension x2 of the coolant channel 136a. This specific dimensional configuration ensures minimal spacing between the hydrogen pipe 134a and the coolant channel 136.

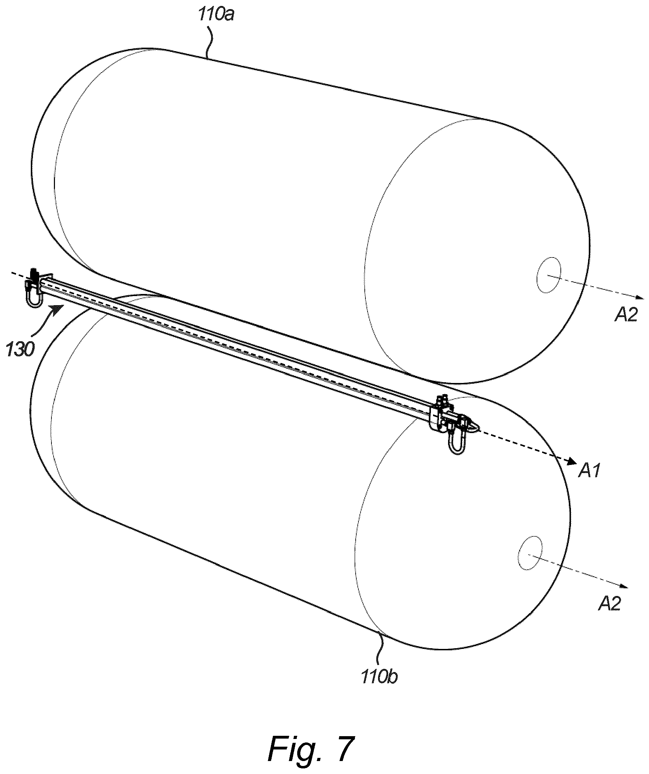

Turning to **FIG. 7****,** a perspective view is shown illustrating the first hydrogen storage tank 110a arranged parallel and adjacent to the second hydrogen storage tank 110b, with the hydrogen heat exchanger 130 disposed in between. In this example, the hydrogen heat exchanger 130 has a main extension along the heat exchanger longitudinal axis A1, while each hydrogen storage tank 110a, 110b has a main extension along a respective tank longitudinal axis A2. The hydrogen heat exchanger 130 is arranged such that its heat exchanger longitudinal axis is substantially parallel to the tank longitudinal axes A2 of the hydrogen storage tanks 110a, 110b. Moreover, the main extension of the hydrogen heat exchanger 130 substantially corresponds to the main extension of the first and second hydrogen storage tanks 110a, 110b.

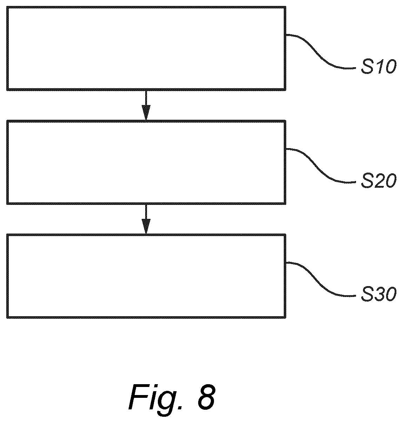

**FIG. 8** illustrates a flowchart of a method for transferring heat to increase the temperature of pressurized hydrogen in a hydrogen fuel supply system 100 for a hydrogen-powered vehicle 1. The hydrogen fuel supply system may be that described with reference to Figs. 1-7.

In a first step or action, S10, a hydrogen heat exchanger 130 arranged externally to a plurality of hydrogen storage tanks 110a, 110b, 110c, is provided. The hydrogen heat exchanger 130 comprises at least one straight hydrogen pipe 134a, 134b, 134c, 134d having a length-to-diameter ratio exceeding 15.

In a second step or action, S20, a coolant fluid is delivered through a coolant channel 136a, 136b, 136c, 136d integrated into the hydrogen heat exchanger 130 for transferring heat from the coolant fluid to hydrogen flowing through the hydrogen pipe 134a, 134b, 134c, 134d.

In a third step of action, S20, the heated hydrogen is supplied to a hydrogen consumer 10, 10.

This method ensures that hydrogen is preheated by the efficient heat transfer from the coolant fluid to the hydrogen within the elongated, narrow hydrogen pipe(s), thereby increasing its temperature prior to its delivery to the hydrogen consumer.

Example 1. A hydrogen fuel supply system for a hydrogen consumer of a vehicle, the fuel supply system comprising: a plurality of hydrogen storage tanks storing pressurized hydrogen; a hydrogen supply line in fluid communication with the plurality of hydrogen storage tanks; a hydrogen heat exchanger extending along heat exchanger longitudinal axis, being arranged externally to the plurality of hydrogen storage tanks and fluidly connected downstream to the hydrogen supply line, the hydrogen heat exchanger comprising: a heat exchanger body having at least one elongated cavity extending along the heat exchanger longitudinal axis; at least one straight hydrogen pipe arranged in the elongated cavity, the hydrogen pipe having a length-to-diameter ratio exceeding 15; and at least one coolant channel configured to receive a coolant fluid, the coolant channel extending inside the cavity, outside of the hydrogen pipe.

Example 2. The hydrogen fuel supply system of example 1, wherein the hydrogen heat exchanger has a main extension along the heat exchanger longitudinal axis, and wherein each hydrogen tank has a main extension along a respective tank longitudinal axis, and wherein the hydrogen heat exchanger is arranged such that its heat exchanger longitudinal axis is substantially parallel to the tank longitudinal axis of the hydrogen storage tanks and/or wherein the main extension of the hydrogen heat exchanger substantially corresponds to the main extension of the hydrogen storage tanks.

Example 3. The hydrogen fuel supply system of any of examples 1-2, wherein the hydrogen pipe has a length-to-diameter ratio exceeding 25, exceeding 40, or exceeding 50.

Example 4. The hydrogen fuel supply system of any of examples 1-3, wherein the elongated cavity is a first elongated cavity and the heat exchanger body further comprises at least a second elongated cavity; and wherein the straight hydrogen pipe is a first straight hydrogen pipe and the heat exchanger further comprises at least a second straight hydrogen pipe arranged in the second elongated cavity, the second straight hydrogen pipe having a length-to-diameter ratio exceeding 15.

Example 5. The hydrogen fuel supply system of example 4, wherein the first and second straight hydrogen pipes are arranged in series to define a continuous hydrogen flow path through the hydrogen heat exchanger, wherein the first and second straight hydrogen pipes are interconnected by at least one interconnecting channel.

Example 6. The hydrogen fuel supply system of example 4, wherein the first and second straight hydrogen pipes are arranged in parallel.

Example 7. The hydrogen fuel supply system of any of examples 4-5, wherein the first straight hydrogen pipe comprises a heat exchanger hydrogen inlet configured to receive hydrogen from the hydrogen supply line, and the second straight hydrogen pipe comprises a heat exchanger hydrogen outlet configured to discharge hydrogen from the hydrogen heat exchanger.

Example 8. The hydrogen fuel supply system of example 7, wherein the heat exchanger hydrogen inlet and the heat exchanger hydrogen outlet are arranged in a common end portion of the hydrogen heat exchanger, or are arranged in opposite end portions of the hydrogen heat exchanger.

Example 9. The hydrogen fuel supply system of any of examples 1-8, wherein the hydrogen heat exchanger further comprises a coolant inlet port and a coolant outlet port for receiving and discharging the coolant fluid, respectively.

Example 10. The hydrogen fuel supply system of example 9, wherein the coolant inlet port and the coolant outlet port are arranged in a common end portion of the hydrogen heat exchanger, or are arranged in opposite end portions of the hydrogen heat exchanger.

Example 11. The hydrogen fuel supply system of any of examples 1-10, wherein the coolant channel is configured to transfer heat from the coolant fluid to hydrogen flowing through the hydrogen pipe to preheat the hydrogen prior to its use in the hydrogen consumer.

Example 12. The hydrogen fuel supply system of any of examples 1-11, further comprising a control unit configured to regulate the flow of coolant fluid to the hydrogen heat exchanger in response to at least one of: the temperature of the coolant fluid; the temperature of the hydrogen within the hydrogen pipe.

Example 13. The hydrogen fuel supply system of any of examples 1-12, wherein the cavity of the heat exchanger body is dimensioned to accommodate the cylindrical geometry of the hydrogen pipe and the coolant channel.

Example 14. The hydrogen fuel supply system of example 13, wherein a radius of the cavity is equal to the sum of the radial extension of the hydrogen pipe and the coolant channel.

Example 15. The hydrogen fuel supply system of any of examples 1-14, wherein the radial cross section of the coolant channel is annulus.

Example 16. The hydrogen fuel supply system of any of examples 1-15, wherein at least two adjacent hydrogen storage tanks are arranged in a parallel configuration and the hydrogen heat exchanger is disposed between the two adjacent tanks.

Example 17. The hydrogen fuel supply system of any of examples 1-16, wherein the heat exchanger body comprises an elongated through-hole extending along the heat exchanger longitudinal axis, and wherein the hydrogen heat exchanger further comprises an electrical heating element arranged inside the elongated through-hole.

Example 18. A hydrogen-powered vehicle comprising the hydrogen fuel supply system according to any of examples 1-17.

Example 19. The hydrogen-powered vehicle of example 18, further comprising a hydrogen consumer, wherein the hydrogen fuel supply system is configured to deliver preheated hydrogen to the hydrogen consumer.

Example 20. A method for transferring heat to increase the temperature of pressurized hydrogen in a hydrogen fuel supply system for a hydrogen-powered vehicle, the method comprising: providing a hydrogen heat exchanger arranged externally to a plurality of hydrogen storage tanks, the hydrogen heat exchanger comprising at least one straight hydrogen pipe having a length-to-diameter ratio exceeding 15; delivering a coolant fluid through a coolant channel integrated into the hydrogen heat exchanger for transferring heat from the coolant fluid to hydrogen flowing through the hydrogen pipe; and supplying the heated hydrogen to a hydrogen consumer.

The operational actions described in any of the exemplary aspects herein are described to provide examples and discussion. The actions may be performed by hardware components, may be embodied in machine-executable instructions to cause a processor to perform the actions, or may be performed by a combination of hardware and software (e.g. comprised in the control unit). Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a, " "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A hydrogen fuel supply system (100) for a hydrogen consumer (10, 10') of a vehicle (1), the fuel supply system (100) comprising:
- a plurality of hydrogen storage tanks (110a, 110b, 110c) storing pressurized hydrogen;
- a hydrogen supply line (120) in fluid communication with the plurality of hydrogen storage tanks (110a, 110b, 110c);
- a hydrogen heat exchanger (130) extending along heat exchanger longitudinal axis (A1), being arranged externally to the plurality of hydrogen storage tanks (110a, 110b, 110c) and fluidly connected downstream to the hydrogen supply line (120), the hydrogen heat exchanger (130) comprising:
- a heat exchanger body (132) having at least one elongated cavity (133a, 133b, 133c, 133d) extending along the heat exchanger longitudinal axis (A1);
- at least one straight hydrogen pipe (134a, 134b, 134c, 134d) arranged in the elongated cavity, the hydrogen pipe (134a, 134b, 134c, 134d) having a length-to-diameter ratio exceeding 15; and
- at least one coolant channel (136a, 136b, 136c, 136d) configured to receive a coolant fluid, the coolant channel extending inside the cavity, outside of the hydrogen pipe.

2. The hydrogen fuel supply system (100) of claim 1, wherein the hydrogen heat exchanger (130) has a main extension along the heat exchanger longitudinal axis (A1), and wherein each hydrogen tank has a main extension along a respective tank longitudinal axis (A2), and wherein the hydrogen heat exchanger is arranged such that its heat exchanger longitudinal axis is substantially parallel to the tank longitudinal axis of the hydrogen storage tanks (110a, 110b, 110c) and/or wherein the main extension of the hydrogen heat exchanger substantially corresponds to the main extension of the hydrogen storage tanks.

3. The hydrogen fuel supply system (100) of any of claims 1-2, wherein the hydrogen pipe (134a, 134b, 134c, 134d) has a length-to-diameter ratio exceeding 25, exceeding 40, or exceeding 50.

4. The hydrogen fuel supply system (100) of any of claims 1-3, wherein the elongated cavity (133a, 133b, 133c, 133d) is a first elongated cavity (133a) and the heat exchanger body (132) further comprises at least a second elongated cavity (133b); and wherein the straight hydrogen pipe (134a, 134b, 134c, 134d) is a first straight hydrogen pipe (134a) and the heat exchanger further comprises at least a second straight hydrogen pipe (134b) arranged in the second elongated cavity, the second straight hydrogen pipe having a length-to-diameter ratio exceeding 15.

5. The hydrogen fuel supply system (100) of claim 4, wherein the first and second straight hydrogen pipes (134a, 134b) are arranged in series to define a continuous hydrogen flow path through the hydrogen heat exchanger (130), wherein the first and second straight hydrogen pipes (134a, 134b) are interconnected by at least one interconnecting channel (135a, 135b, 135c).

6. The hydrogen fuel supply system (100) of claim 4, wherein the first and second straight hydrogen pipes (134a, 134b) are arranged in parallel.

7. The hydrogen fuel supply system (100) of any of claims 4-5, wherein the first straight hydrogen pipe (134a) comprises a heat exchanger hydrogen inlet (131a) configured to receive hydrogen from the hydrogen supply line, and the second straight hydrogen pipe (134b) comprises a heat exchanger hydrogen outlet (131b) configured to discharge hydrogen from the hydrogen heat exchanger.

8. The hydrogen fuel supply system (100) of claim 7, wherein the heat exchanger hydrogen inlet (131a) and the heat exchanger hydrogen outlet (131b) are arranged in a common end portion (130a) of the hydrogen heat exchanger, or are arranged in opposite end portions (130a, 130b) of the hydrogen heat exchanger.

9. The hydrogen fuel supply system (100) of any of claims 1-8, wherein the hydrogen heat exchanger further comprises a coolant inlet port (137a) and a coolant outlet port (137b) for receiving and discharging the coolant fluid, respectively.

10. The hydrogen fuel supply system (100) of claim 9, wherein the coolant inlet port (137a) and the coolant outlet port (137b) are arranged in a common end portion (130b) of the hydrogen heat exchanger, or are arranged in opposite end portions (130a, 130b) of the hydrogen heat exchanger.

11. The hydrogen fuel supply system (100) of any of claims 1-10, wherein the cavity (133a, 133b, 133c, 133d) of the heat exchanger body (132) is dimensioned to accommodate the cylindrical geometry of the hydrogen pipe (134a, 134b, 134c, 134d) and the coolant channel (136a, 136b, 136c, 136d).

12. The hydrogen fuel supply system (100) of claim 11, wherein a radius (r1) of the cavity (133a) is equal to the sum of the radial extension (x1, x2) of the hydrogen pipe (134a) and the coolant channel (136a).

13. The hydrogen fuel supply system (100) of any of claims 1-12, wherein the heat exchanger body comprises an elongated through-hole (138) extending along the heat exchanger longitudinal axis (A1), and wherein the hydrogen heat exchanger further comprises an electrical heating element (139) arranged inside the elongated through-hole.

14. A hydrogen-powered vehicle (1) comprising the hydrogen fuel supply system (100) according to any of claims 1-13.

15. A method for transferring heat to increase the temperature of pressurized hydrogen in a hydrogen fuel supply system (100) for a hydrogen-powered vehicle (1), the method comprising:
- providing (S10) a hydrogen heat exchanger (130) arranged externally to a plurality of hydrogen storage tanks (110a, 110b, 110c), the hydrogen heat exchanger (130) comprising at least one straight hydrogen pipe (134a, 134b, 134c, 134d) having a length-to-diameter ratio exceeding 15;
- delivering (S20) a coolant fluid through a coolant channel (136a, 136b, 136c, 136d) integrated into the hydrogen heat exchanger (130) for transferring heat from the coolant fluid to hydrogen flowing through the hydrogen pipe (134a, 134b, 134c, 134d); and
- supplying (S30) the heated hydrogen to a hydrogen consumer (10, 10').
